# EUROPEAN PATENT SPECIFICATION

(11) **EP 0 760 735 B1**
(45) Date of publication and mention of the grant of the patent: **07.06.2000**
(21) Application number: 95912970.1
(22) Date of filing: 23.03.1995
(51) Int. Cl.: B27B 3/10, B27B 3/14, B27B 3/24, B27B 7/00, B27B 11/08

(54) **PORTABLE SAWMILL**
TRANSPORTABELES SÄGEWERK
MACHINE A SCIER PORTABLE

(30) Priority: 23.03.1994 AU PM464394; 06.06.1994 AU PM614994; 14.11.1994 AU PM941494
(43) Date of publication of application: 12.03.1997
(73) Proprietor: Lucas, Rex Cameron, Beechworth, VIC 3747 (AU)
(72) Inventor: Lucas, Rex Cameron, Beechworth, VIC 3747 (AU)
(74) Representative: Siebmanns, Hubertus
(86) International application number: PCT/AU95/00163
(87) International publication number: WO 95/25619

(56) References cited:
- AU-A- 2 731 488
- AU-A- 3 198 384
- AU-A- 3 497 489
- AU-A- 6 327 486

## Description

### FIELD OF THE INVENTION:

This invention relates to a portable sawmill with improved lateral and longitudinal stability.

### BACKGROUND OF THE INVENTION:

A timber sawing device comprising a single circular sawblade, which pivots through 90° to act in both the horizontal and vertical planes, is known. As is known, this sawblade is mounted together with an engine on a laterally movable carriage which in turn is mounted on a longitudinally movable cross-bed which may travel along two rails between which the operator has access. Again, as is known, these rails have been mounted on end frames located in a predetermined position and the rails have been manually and independently raised and lowered at the two support points on each rail.

By US-A-5 046 391, there is previously known a sawmill, which has rectangular end frames with horizontal rails mounted on horizontal members supported by the vertical members of the end frames. A winding mechanism is attached to brackets connecting the horizontal rails to the end frames via flexible ropes.

One object of the invention is to improve the stability of the frame of the sawmill. Another object of the invention is to improve the operation and stability of the saw means, its ease of erection, assembly and operation, for example, by a single operator even in rough conditions.

### BRIEF SUMMARY OF THE INVENTION:

This invention relates to a portable sawmill with lateral and longitudinal stability which comprises:
(a) first and second substantially rectangular end frames, each end frame comprising two horizontal and two vertical members;
(b) longitudinal, horizontal rails slidably connected by means of brackets to corresponding first and second vertical members;
(c) first and second winding means in combination with respective first and second upper horizontal members;
(d) idler wheels located at the bottom of each vertical member,
   wherein each bracket is connected by use of flexible joining means, as defined herein, by way of the respective winding means and the respective idler wheels, to the bottom of the respective end frame in such a manner that positive up-and-down winding of the rails is achieved.

The invention is defined in appendant claim 1.

In one variation of the general embodiment above, a self-energising brake may be used in connection with one or each winding means.

In another variation of the general embodiment above, brace means are used connected to the upper region of one or both vertical members of the end frames, wherein the means of connection is such that each brace means may be altered in attitude and length with respect to its respective vertical member to provide lateral support to the sawmill or to align the sawmill with the log.

A further embodiment of this invention provides a support bracket which is suitable for use with a portable sawmill as defined above which comprises:
- a bracket body, comprising
   - support means adapted to hold a rail at a selected height above the ground; and
   - sliding means adapted to fit a vertical member and permit the bracket body to be moved up and down thereby holding the rails at the selected height,
   wherein end frames forming part of the sawmill may be positioned at selected positions along the rails.

An embodiment of this invention yet further provides a braced support and sleeve combination which is suitable for use with a portable sawmill as defined above which comprises:
(a) a vertically extending braced support and
(b) a sleeve adapted to extend at least partially around the vertically extending braced support and movable along that support,
   wherein the sleeve is attachable to a rail whereby the rail and hence the sawmill may be supported in the horizontal plane.

An embodiment of the invention even further provides a drive means which is suitable for use with a portable sawmill as defined above which comprises:
- an engine comprising a driveshaft,
   wherein the centreline of the driveshaft is mounted below and as close as possible to the axis through which a sawblade forming part of the sawmill pivots.

An embodiment of this invention yet further provides a movement control means which is suitable for use with a portable sawmill as defined above which comprises:
- a resilient elbowed strut adapted to travel from a first elbowed position to a second elbowed position through a position in which the strut is straight,
- the strut connecting an engine mount to a mount for a saw means through a pivot point,
   wherein a rotational force applied to the strut straightens the strut and then rotates it through centre whereby the saw means may take up two stable positions at right angles to each other and travel speed is hydraulically controlled between the two stable positions.

### BRIEF DESCRIPTION OF THE DRAWINGS:

The accompanying drawings illustrate one embodiment of the invention which:
Figure 1 is an isometric view from one side of the framework in the set-up position;
Figure 2 is a similar view to Figure 1 but refers to the operating position with rails added and brace means turned 90°;
Figure 3 is a similar view to Figure 2 with the addition of a support means for an engine and saw means;
Figure 4 is a similar view to Figure 3 with the addition of the engine and saw means;
Figure 5 is a front view of an end frame showing the position of winding means;
Figure 6 is a side view of the end frame of Figure 5;
Figure 7 is a top view in partial cross-section of a support means together with a saw means coupled to an engine;
Figures 8 and 9 are successive end views of the saw means and engine illustrated in Figure 7 illustrating the use of a strut means;
Figure 10 is a similar view to Figure 2 but showing the use of a brace means in connection with a rail; and
Figure 11 is a side view of the brace means illustrated in Figure 10.

### DETAILED DESCRIPTION OF THE INVENTION:

The "flexible joining means" referred to in the specification and claims means such things as ropes (natural, synthetic or wire) and chains.

A self-energising brake is constructed so as to store energy which may be used to provide braking power. Thus such a brake may be combined with a winch to control the operation of the winch.

In the case of the resilient elbowed strut, it is preferred to use an oil filled gas strut. The oil modulates the speed of operation of the piston.

The reason for mounting the engine driveshaft low relates to the desirability perceived by the inventor of keeping the centre of gravity of the engine to where the saw engages the timber.

Turning to the drawings, a rectangular framework is indicated generally by numeral 10, comprising rectangular end frames 11 and 12. Thus end frame 11 comprises upper and lower members 13 and 14 respectively and side members 15 and 16 respectively. A telescope brace means 17 is shown as propping end frame 11 by way of side member 16. Side members 15 and 16 are fitted with slidable brackets 18 and 19 respectively. A winding means 20 is shown associated with upper member 13 and side member 15.

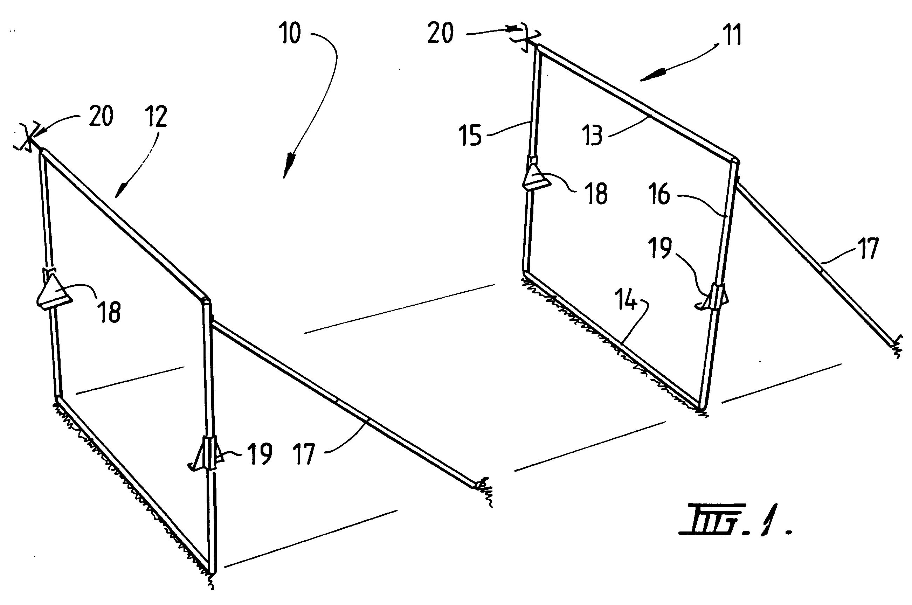

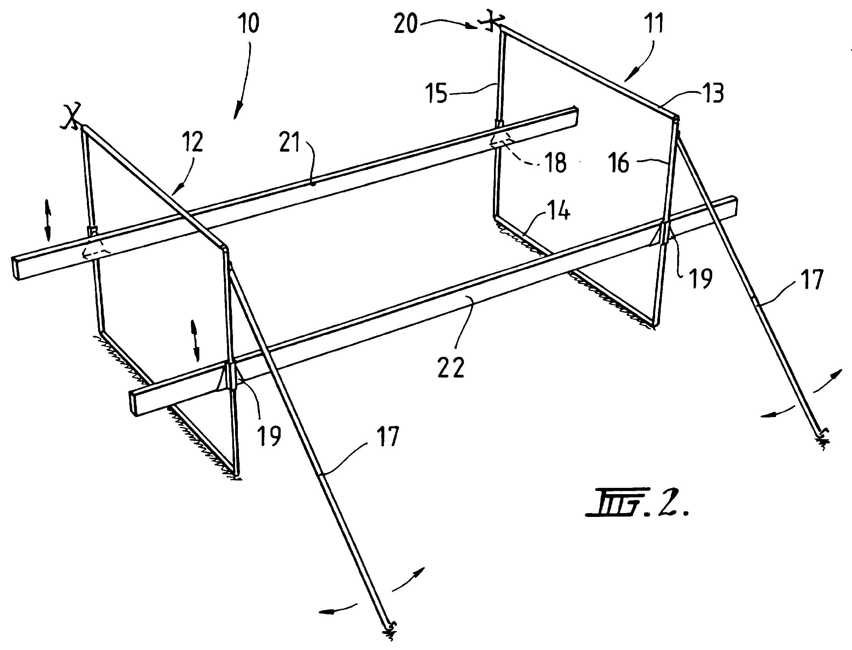

In Figure 2, longitudinal rails 21 and 22 are shown as joining the insides of the side members of end frames 11 and 12. Each side rail is adjustable up or down using slidable brackets 18, 19 etc. Brace means 17 is shown in the operating position.

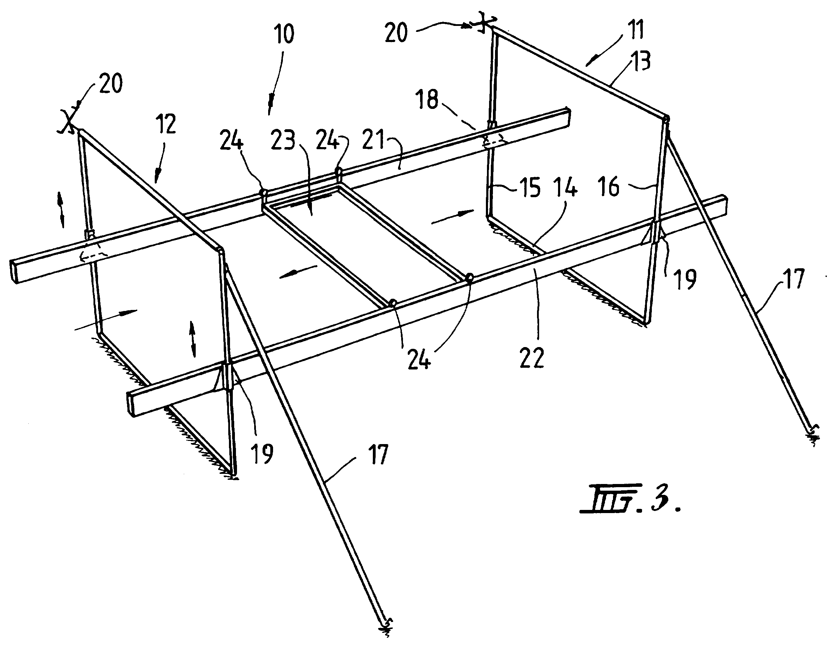

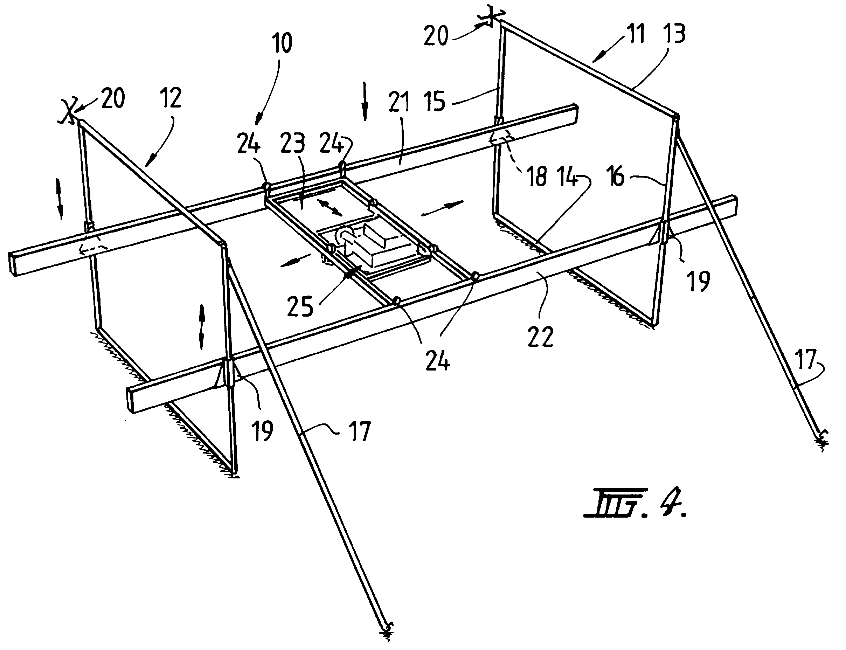

In Figure 3, a support means 23 has been added for carriage of an engine and saw means combination 25; see Figure 4. A wheel means 24 is indicated - this wheel means, and three others, support the support means 23 movably on rails 21 and 22.

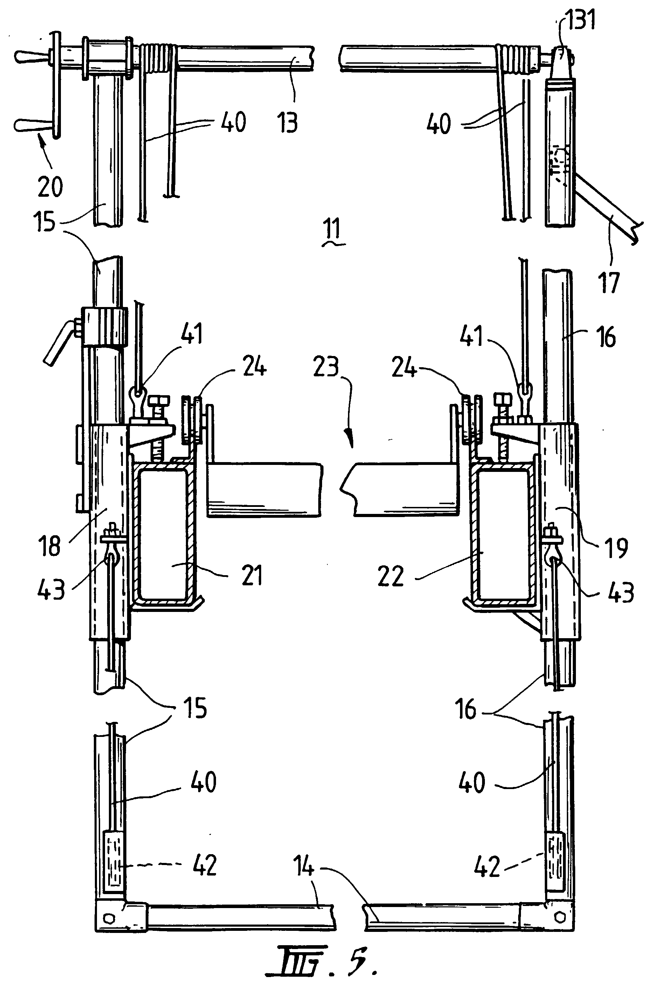

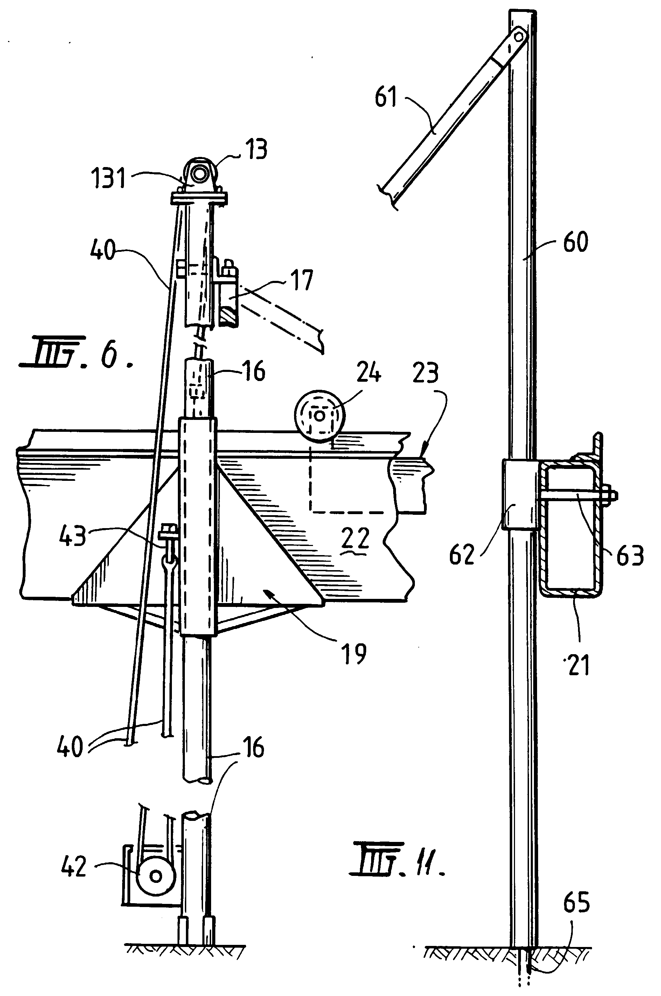

Turning to Figures 5 and 6, these figures provide detail of the operation of winding means 20, shown in combination with end frame 11. Thus a rope 40 is shown wrapped around rotatable upper member 13; see journalled portion 131. Rope 40 is attached to first lug 41 on slidable bracket 18. The other end of rope 40 runs around idler wheel 42 at the bottom of side member 15 to a second lug 43 positioned about one half the way up slidable bracket 18.

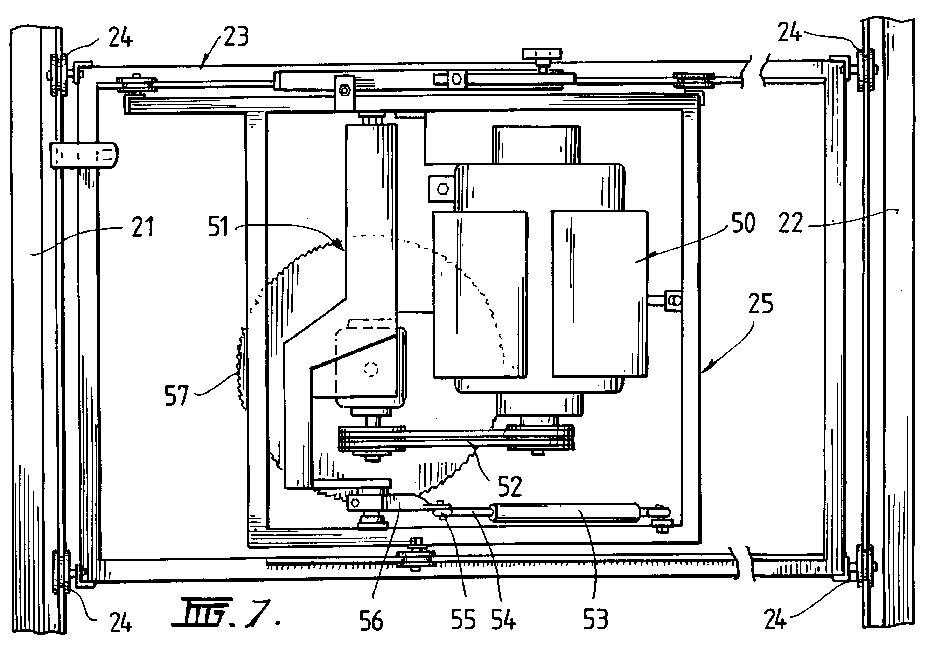

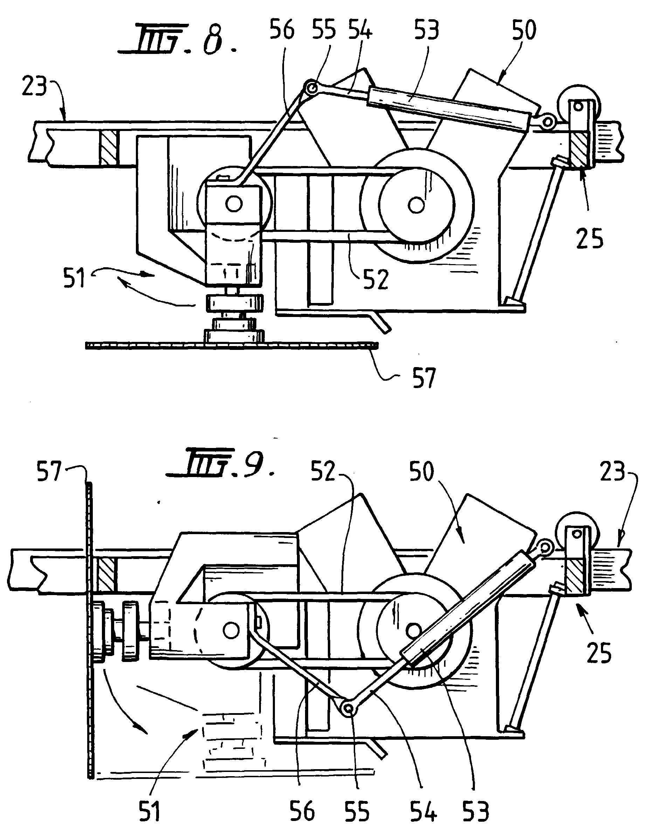

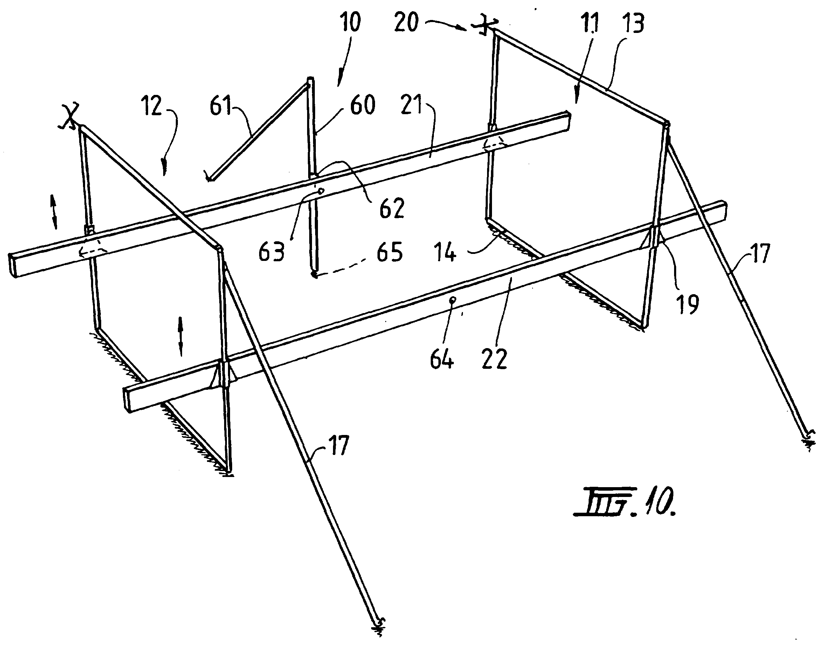

With regard to Figure 7, saw means combination 25 comprises an engine 50 coupled to a saw blade 51 by means of a belt drive 52. The orientation of saw means 51 is controlled by means of gas strut 53. As may be seen from Figure 8 and 9, gas strut 53 comprises a cylinder and rod portion 54, a hinge point 55 and a connection portion 56. The actual saw blade is indicated by numeral 57.

Turning to Figures 10 and 11, a braced support 60 is supported by a secondary prop 61. A sleeve means 62 joins support 60 to rail 21. This sleeve means is connected to rail 21 by bolt 63. A hole 64 is indicated in the other rail 22 and accommodates a bolt similar to bolt 63. A spike 65 is positioned at the bottom of braced support 60 to assist its placement in the ground.

## Claims

1. A portable sawmill including:
(a) first and second substantially rectangular end frames (11, 12) for placement on the ground, each end frame comprising an upper and a lower horizontal member (13, 14) and two vertical members (15, 16);
(b) a pair of longitudinal rails (21, 22) extending between said first and second end frames (11, 12);
(c) brackets (18, 19) for slidably connecting said rails (21, 22) to said end frames (11, 12);
(d) winding means (20, 40) on said first and second end frames (11, 12), said winding means including flexible joining means (40) connected to said brackets (18, 19) on each end frame (11, 12) for adjustably moving said rails (21, 22) in unison between upper and lower positions on the end frames and for retaining said rails in an adjusting position;
(e) a carriage (23) for a saw blade mounting (25) and prime mover, said carriage engageable with said rails and longitudinally movable thereon; and
(f) brace means (17) for connection between an upper region of at least one end frame (11, 12) and the ground;
characterised in that
each rail (21, 22) is directly slidably connected to said vertical members (15, 16) by means of one of said brackets (18, 19), each joining means (40) being guided around an idler wheel (42) located at a lower end of each vertical member (15, 16), each said upper horizontal member (13) being rotatable, said flexible joining means (40) on each end frame being wrapped around said upper horizontal member (13) of that end frame, at least one of said brackets (18, 19) being releasably lockable to the related vertical member (15, 16).

2. A portable sawmill as claimed in claim 1, wherein said brace means (17) are ground engageable and/or adjustable in length and/or have connection means connected to said at least one end frame (11, 12), said connection means being adjustable such that each brace means may be altered in attitude/adjusted in position with respect to its respective end frame to provide lateral support to the sawmill or to align the sawmill with a log.

3. A portable sawmill as claimed in claim 1, wherein each of said bracket means (18,19) comprises:
a bracket body,
support means adapted to hold one of said rails (21,22);
and sliding means adapted to engage one of said vertical members (15,16) to enable the bracket body to be moved vertically on one of said end frames (11,12).

4. A portable sawmill as claimed in claim 1, wherein there is:
(a) a vertically extending, laterally braced support (60); and
(b) a sleeve (62) adapted to extend, at least partially, around said braced support (60) and movable therealong, said sleeve (62) being attachable to one of said rails (21,22), whereby the rail and hence the sawmill are laterally braced.

5. A portable sawmill as claimed in claim 1, wherein said prime mover includes a motor (50) and drive means (80-90) having a drive shaft (80), the centre line of the drive shaft being mounted below and adjacent a saw blade mounting axis, about which said saw blade mounting pivots.

6. A portable sawmill as claimed in claim 5, further comprising pivot control means, which comprises:
a biased, resilient elbowed strut (53) adapted to travel from a first elbowed position to a second elbowed position through a position, in which the strut is straight,
the strut (53) connecting said carriage (23) to said saw blade mounting (25),
whereby a force applied to move the saw blade mounting (25) about the pivot causes the strut to straighten against the biasing and then rotate through centre, whereby the biasing causes the saw blade mounting (25) to take up stable position with a saw blade (57) being at right angles to its previous position.

7. A portable sawmill as claimed in claim 3, wherein each of said brackets (18,19) includes a sleeve (92) slidingly engaged on the corresponding vertical member (15,16) the sleeve (92) being coupled to a support (70), to which a part of the respective rail (21,22) is removably fastened.

8. A portable sawmill as claimed in claim 1, wherein said carriage (23) includes a support means having wheels (74) engaged on the rails (21,22) for longitudinal movement therealong, and said prime mover and saw blade mounting (25) being movable on the support means transverse to the rails.

## Patentansprüche

1. Transportables Sägewerk umfassend:
a) erste und zweite, im wesentlichen rechteckförmige Endrahmen (11, 12) zum Ausstellen auf dem Boden, wobei jeder Endrahmen ein oberes und ein unteres horizontales Teil (13, 14) und zwei vertikale Teile (15, 16) aufweist;
b) ein Paar längslaufende Schienen (21, 22) mit Erstreckung zwischen genannten ersten und zweiten Endrahmen (11, 12);
c) Konsolen (18, 19) zur gleitbaren Verbindung genannter Schienen (21, 22) mit genannten Endrahmen (11, 12);
d) eine Winde (20, 40) an genannten ersten und zweiten Endrahmen (11, 12), welche Winde flexible Verbindungsmittel (40) besitzt, die an genannte Konsolen (18, 19) an jedem Endrahmen (11, 12) angeschlossen sind zur einstellbaren Bewegung im Einklang der genannten Schienen (21, 22) zwischen oberen und unteren Lagen an den Endrahmen und zum Zurückhalten genannter Schienen in einer eingestellten Lage;
e) einen Wagen (23) für eine Sägeblattaufhängung (25) und einen ersten Antrieb, wobei der Wagen mit genannten Schienen in Eingriff bringbar und auf diesen in Längsrichtung beweglich angeordnet ist; und
f) Verstrebungsmittel (17) zur Verbindung des oberen Bereiches von wenigstens einem Endrahmen (11, 12) mit dem Boden;
**dadurch gekennzeichnet, dass**
jede Schiene (21, 22) direkt gleitbar verbunden ist mit genannten vertikalen Teilen (15, 16) mittels einer der genannten Konsolen (18, 19), dass genannte Verbindungsmittel (40) um eine Umlenkrolle (42) geführt sind, welche am unteren Ende jedes vertikalen Teiles (15, 16) angeordnet ist, dass jedes der genannten oberen horizontalen Teile (13) rotierbar angeordnet ist, dass genanntes flexibles Verbindungsmittel (40) an jedem Endrahmen um genanntes oberes horizontales Teil (13) dieses Endrahmens geführt ist, und dass wenigstens eine der genannten Konsolen (18, 19) lösbar an dem zugehörigen vertikalen Teil (15, 16) arretierbar ist.

2. Transportables Sägewerk nach Anspruch 1, **dadurch gekennzeichnet, dass** genannte Verstrebungsmittel (17) am Boden arretierbar und/oder in ihrer Länge einstellbar sind und/ oder Verbindungsmittel besitzen, die mit genanntem wenigstens einem Endrahmen (11, 12) verbunden sind, dass genannte Verbindungsmittel derart einstellbar sind, dass jedes Verbindungsmittel in seiner Einstellung und Veränderlichkeit in der Lage im Hinblick aufseinen zugehörigen Endrahmen einstellbar ist, um eine Seitenstütze für das Sägewerk zu bilden oder das letztere gegenüber einem Baumstamm auszurichten.

3. Transportables Sägewerk nach Anspruch 1, **dadurch gekennzeichnet, dass** jede der genannten Konsolen (18, 19) umfasst:
einen Konsolenkörper,
Stützmittel, um eine genannter Schienen (21, 22) zu tragen;
sowie Gleitmittel, die zur Verbindung mit einem der genannten vertikalen Teile (15, 16) angepasst sind, um dem Konsolenkörper zu gestatten, an einem der genanntem Endrahmen (11, 12) vertikal bewegt zu werden.

4. Transportables Sägewerk nach Anspruch 1, **dadurch gekennzeichnet, dass** dieses umfasst:
(a) eine sich vertikal erstreckende, in seitlicher Richtung verstrebte Stütze (60); und
(b) eine Manschette (62) die zur wenigstens teilweisen Erstreckung um genannte verstrebte Stütze (60) herum angepasst und daran entlang bewegbar ist, wobei genannte Manschette (62) an einer der genannten Schienen (21, 22) befestigbar ist, und wobei die Schiene und somit das Sägewerk seitlich verstrebt sind.

5. Transportables Sägewerk nach Anspruch 1, **dadurch gekennzeichnet, dass** genannter erster Antrieb einen Motor (50) und Antriebsmittel (80-90) umfasst, welche eine Antriebswelle (80) besitzten, wobei die Mittellinie der Antriebswelle unterhalb und benachbart zu einer Sägeblattaufhängeachse angeordnet ist, um welche die genannte Sägeblattaufhängung schwenkbar angeordnet ist.

6. Transportables Sägewerk nach Anspruch 5 mit schwenkbaren Steuermitteln, **dadurch gekennzeichnet, dass** dieseumfassen:
eine schräggestellte, nachgiebige ellenbogenförmige Stütze (53), die vorgesehen ist zur Wanderung von einer ersten ellenbogenförmigen Lage zu einer zweiten ellenbogenförmigen Lage über eine Lage, in welcher die Stütze gerade ist,
eine Verbindung durch die Stütze (53) von genanntem Wagen (23) zu genannter Sägeblattaufhängung (25),
wobei eine angewandte Kraft zur Bewegung der Sägeblattaufhängung (25) über eine Schwenkachse die Stütze veranlasst, sich gegen die Schrägstellung auszurichten und alsdann durch das Zentrum zu schwenken, wobei die Schrägstellung die Sägeblattaufhängung (25) veranlasst, eine stabile Lage einzunehmen, wobei ein Sägeblatt (57) sich in rechten Winkeln zu seiner vorhergehenden Lage ausrichtet.

7. Transportables Sägewerk nach Anspruch 3, **dadurch gekennzeichnet, dass** jede der genannten Konsolen (18, 19) eine Manschette (92) umfasst, welche gleitend mit dem zugehörigen vertikalen Teil (15, 16) in Eingriffsteht, und dass die Manschette (92) an eine Stütze (70) angekuppelt ist, an welcher ein Teil der betreffenden Schiene (21, 22) abnehmbar befestigt ist.

8. Transportables Sägewerk nach Anspruch 1, **dadurch gekennzeichnet, dass** genannter Wagen (23) Tragemittel mit Rädern (74) umfasst, welche auf den Schienen (21, 22) ablaufen zwecks Bewegung entlang derselben in länglicher Richtung, und dass genannter erster Antrieb und die Sägeblattaufhängung (25) quer zu den Schienen aufden Tragemitteln bewegbar angeordnet sind.

## Revendications

1. Machine de sciage portable, comprenant :
(a) des premier et deuxième cadres d'extrémité sensiblement rectangulaires (11, 12) pour mise en place sur Le sol, chaque cadre d'extrémité comportant un élément horizontal supérieur et un inférieur (13, 14) et deux éléments verticaux (15, 16) ;
(b) une paire de rails longitudinaux (21, 22) s'étendant entre lesdits premier et deuxième cadres d'extrémité (11, 12) ;
(c) des supports (18, 19) destinés à relier de façon coulissante lesdits rails (21, 22) aux dits cadres d'extrémité (11, 12) ;
(d) des moyens d'enroulement (20, 40) sur lesdits premier et deuxième cadres d'extrémité (11, 12), lesdits moyens d'enroulement comprenant des moyens de liaison flexibles (40) reliés aux dits supports (18, 19) sur chaque cadre d'extrémité (11, 12) afin de déplacer de manière réglable lesdits rails (21, 22) à l'unisson entre des position. supérieure et inférieure sur les cadres d'extrémité et afin de retenir lesdits rails dans une position de réglage ;
(e) un chariot (23) pour un support de lame de soie (25) et un groupe de motorisation, ledit chariot pouvant être engagé avec lesdits rails et longitudinalement mobile dessus ; et
(f) des moyens de haubanage (17) pour raccordement entre une zone supérieure d'au moins un cadre d'extrémité (11, 12) et le sol ;
caractérisée en ce que
chaque rail (21, 22) eut directement relié de façon coulissante aux dits éléments verticaux (15, 16) au moyen d'un desdits supports (18, 19), chacun des moyens de liaison (40) étant guidé autour d'une roue de renvoi (42) disposé, au niveau d'une extrémité inférieure de chaque élément vertical (15, 16), chaque dit élément horizontal supérieur (13) étant rotatif, lesdits moyens de liaison flexibles (40) sur chaque cadre d'extrémité étant enroulés autour dudit élément horizontal supérieur (13) de ce cadre d'extrémité, au moins un desdits supports (18, 19) pouvant être bloqué de façon libérable sur l'élément vertical concerné (15, 16).

2. Machine de sciage portable selon la revendication 1, dans laquelle lesdits moyens de haubanage (17) peuvent engager le sol et/ou sont réglables en longueur et/ou possèdent des moyens de raccordement reliés audit au moins un cadre d'extrémité (11, 12), lesdits moyens de raccordement étant réglables de telle aorte que chacun des moyens de haubanage peut être modifié en attitude/ajusté en position par rapport à son cadre d'extrémité respectif afin de procurer un support à la machine de sciage ou afin d'aligner la machine de sciage avec une bille.

3. Machine de sciage portable salon la revendication 1, dans laquelle chacun desdits moyens de support (18, 19) comporte :
un corps de support,
des moyens de support prévus pour supporter un desdits rails (21, 22) ;
et des moyens coulissants prévus pour engager un desdits éléments verticaux (15, 16) afin de permettre au corps de support d'être déplacé verticalement sur un desdits cadres d'extrémité (11, 12).

4. Machine de sciage portable selon la revendication 1, dans laquelle il y a :
(a) un support haubané latéralement et s'étendant verticalement (60) ; et
(b) un manchon (62) prévu pour s'étendre, au moins partiellement, autour dudit support haubané (60) et mobile le long de celui-ci, ledit manchon (62) pouvant être fixé sur un desdits rails (21, 22), de sorte que le rail et donc la machine de sciage sont haubanés latéralement.

5. Machine de sciage portable selon la revendication 1, dans laquelle ledit groupe de motorisation comprend un moteur (50) et des moyens d'entraînement (80 à 90) ayant un arbre d'entraînement (80), l'axe de l'arbre d'entraînement étant monté sous et de façon adjacente à un axe de support de lame de scie, autour duquel pivote ledit support de lame de scie.

6. Machine de sciage portable selon la revendication 5, comportant on outre des moyens de commande de pivotement, qui comportent :
une jambe de force coudée élastique rappelée (53) prévue pour se déplacer depuis une première position coudée jusqu'à une deuxième position coudée on passant par une position dans laquelle la jambe de force est droite,
la jambe de force (53) reliant ledit chariot (23) audit support do lame de scia (25),
de sorte qu'une force appliquée afin de déplacer le support de lame de scie (25) autour du pivot amène la jambe de force à se redresser à l'encontre du rappel et à tourner alors on passant par le contre, de sorte que le rappel amène le support de lame de scie (25) à prendre une position stable avec une lame de scie (57) qui est à angle droit par rapport à la position précédente.

7. Machins de sciage portable selon la revendication 3, dans laquelle chacun desdits supports (18, 19) comprend un manchon (92) engagé de façon coulissants sur l'élément vertical (15, 16) correspondant, le manchon (92) étant relié à un support (70), sur lequel est fixé de façon amovible une partie du rail (21, 22) respectif.

8. Machine de sciage portable selon la revendication 1, dans laquelle ledit chariot (23) comprend des moyens de support ayant des roues (74) engagées sur les rails (21, 22) pour un mouvement longitudinal le long de ceux-ci, et ledit groupe de motorisation et le support de laine de scie (25) étant mobiles sur les moyens de support transversalement aux rails.
